# EUROPÄISCHE PATENTSCHRIFT

(11) **EP 1 123 678 B1**
(45) Veröffentlichungstag und Bekanntmachung des Hinweises auf die Patenterteilung: **08.10.2003**
(21) Anmeldenummer: 01101793.6
(22) Anmeldetag: 26.01.2001
(51) Int. Cl.: A47J 43/046, A47J 43/07

(54) **Küchenmaschine**
Kitchen machine
Appareil de cuisine

(30) Priorität: 10.02.2000 DE 10005920
(43) Veröffentlichungstag der Anmeldung: 16.08.2001
(73) Patentinhaber: Vorwerk & Co. Interholding GmbH, 42275 Wuppertal (DE)
(72) Erfinder: Fieseler, Martin, Dr., 45134 Essen (DE); Rettich, Thorsten, Dr., 45133 Essen (DE)
(74) Vertreter: Müller, Enno, Dipl.-Ing.

(56) Entgegenhaltungen:
- DE-A- 4 414 824
- DE-C- 107 590
- FR-A- 2 651 982
- US-A- 5 174 403

## Beschreibung

Die Erfindung betrifft eine Küchenmaschine mit einem Rührgefäß und einem Antrieb für ein Rührwerk in dem Rührgefäß, wobei das Rührgefäß in seinem unteren Bereich aufheizbar und weiter eine Wägeeinrichtung vorgesehen ist und wobei die Küchenmaschine über voneinander distanzierte Fußsockel auf einer Unterlage aufsteht.

Eine derartige Küchenmaschine mit Wägeeinrichtung ist aus der DE-OS 44 14 824 bekannt. Hier ist ein Wägebalken vorgesehen, welcher in einem verwindungssteifen Wagenchassis eingebaut ist. Das Gesamtgewicht der Antriebseinheit und des Mixtopfes ruht hierbei auf diesem Wägebalken.

Im Hinblick auf den zuvor beschriebenen Stand der Technik wird eine technische Problematik der Erfindung darin gesehen, eine Küchenmaschine mit Wägeeinrichtung der in Rede stehenden Art in vorteilhafter Weise weiterzubilden.

Diese Problematik ist zunächst und im Wesentlichen durch den Gegenstand des Anspruchs 1 gelöst, wobei darauf abgestellt ist, dass in jedem Fußsockel eine Wägeeinrichtung integriert ist. Hierdurch ist ein technisch simples Waagenprinzip realisiert worden, bei welchem die Waagenfunktion von allen anderen Funktionen (Sicherheitselemente-Verriegelung, Antriebseinheit) entkoppelt ist. Im übertragenen Sinne ist durch die erfindungsgemäße Anordnung der Wägeeinheit in den Fußsockeln eine vollkommene Entkopplung des gesamten Küchengerätes von der Wägeeinrichtung realisiert. Das Gesamtgewicht wird auf die voneinander distanzierten Fußsockel verteilt, wodurch eine gegenüber dem bekannten Stand der Technik erhöhte Auflösung ermöglicht ist. Als weiter vorteilhaft erweist sich hierbei, dass das Küchengerät selbst nicht verwindungssteif ausgebildet sein muss. Zur Ermittlung des Gesamtgewichtes werden die an den Fußsockeln gemessenen Werte in einfachster Weise addiert. Zudem können durch die erfindungsgemäße Ausrüstung der Fußsockel mit integrierten Wägeeinrichtungen Küchenmaschinen mit einer derartigen Wägevorrichtung in einfachster Weise nachgerüstet werden. Zufolge dessen sind die erfindungsgemäßen, mit integrierten Wägeeinrichtungen versehenen Fußsockel auch als Zubehör für Küchenmaschinen oder dergleichen anbietbar. In weiterer Ausgestaltung des Erfindungsgegenstandes ist vorgesehen, dass die Wägeeinrichtung aus einer Keramikplatte besteht, die mit druckabhängigen Widerständen und Festwiderständen in Brückenschaltung ausgerüstet ist. Erfindungsgemäß sind diese Widerstände in Art einer Wheatstone-Messbrücke angeordnet. Zudem erweist es sich als vorteilhaft, dass die Widerstände innenseitig, dem Inneren der Küchenmaschine zugewandt angeordnet sind, während außenseitig gegenüberliegend zu den Widerständen ein Druckfuß vorgesehen ist. Letzterer kann in gewohnter Weise aus einem Gummi oder ähnlichem Material bestehen. Weiterhin wird vorgeschlagen, dass die Keramikplatte topfartig eingezogen ist und die Widerstände auf dem Topfboden angeordnet sind. Bezüglich der Keramikplatte kann es sich hierbei um ein Keramik-Dickschichtmodul handeln, auf welchem zwei druckabhängige Widerstände und zwei Festwiderstände in Brückenschaltung aufgebracht sind. Schließlich erweist es sich noch als vorteilhaft, dass drei Druckfüße vorgesehen sind, womit das Gesamtgewicht des Küchengerätes auf drei Sensoren verteilt wird. Zufolge dessen ist eine genaue Messung durchführbar.

Nachstehend ist die Erfindung anhand der beigefügten Zeichnung, welche lediglich ein Ausführungsbeispiel darstellt, näher erläutert. Es zeigt:
- Fig. 1: ein erfindungsgemäßes Küchengerät mit in Fußsockeln integrierten Wägeeinrichtungen;
- Fig. 2: eine Herausvergrößerung des Bereiches II-II in Fig. 1 bei schematischer Darstellung eines mit einer Wägeeinrichtung versehenen Fußsockels;
- Fig. 3: eine Schemadarstellung einer, einem Fußsockel zuordbaren Wägeeinrichtung.

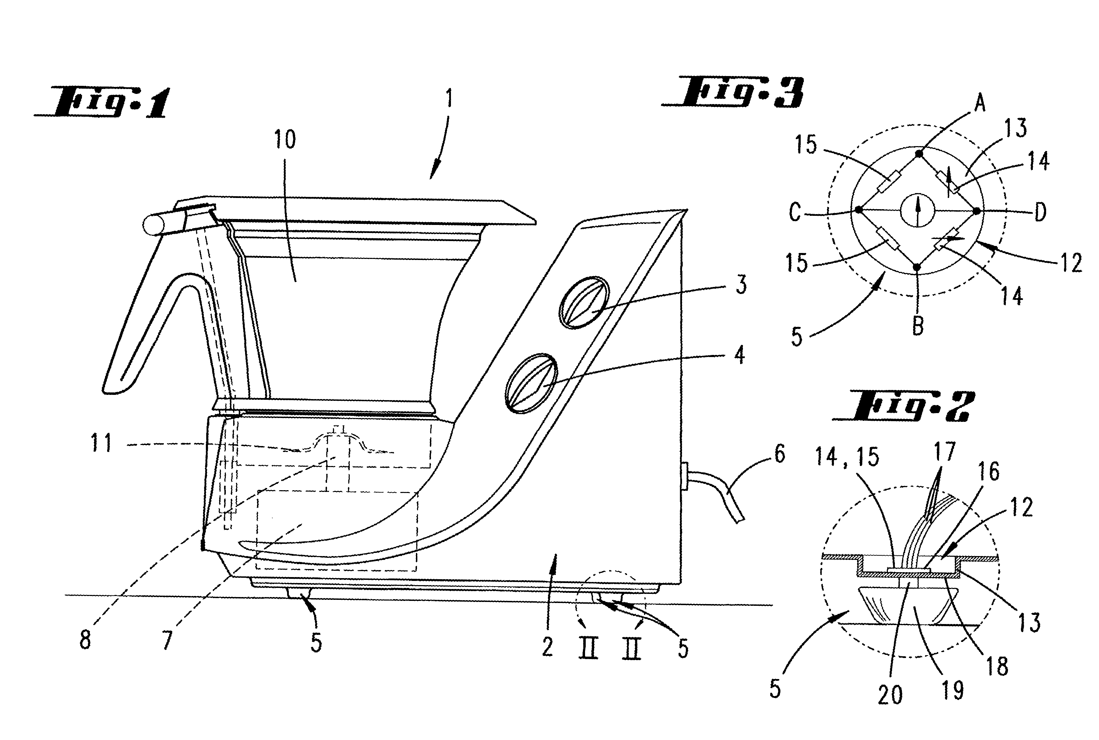

Dargestellt und beschrieben ist zunächst mit Bezug zu Fig. 1 eine Küchenmaschine 1, welche ein Gehäuse 2, in welchem zwei Drehschalter 3, 4 angeordnet sind, aufweist. Das Gehäuse 2 besitzt weiterhin unterseitig drei voneinander distanzierte Fußsockel 5, sowie rückseitig einen Elektrokabelanschluss 6.

Ein in dem Gehäuse 2 angeordneter Antrieb 7, bspw. in Form eines Elektromotors, treibt über eine Antriebswelle 8 ein innerhalb eines Rührgefäßes 10 im Bodenbereich angeordnetes Rührwerk 11 an. Die Drehzahl des Rührwerkes 11 wird über den Drehschalter 4 eingestellt.

Die Küchenmaschine 1 dient u. a. zur Herstellung von Speisen, wozu zweckmäßigerweise die in das Rührgefäß 10 einzubringenden Zutaten gemäß Rezept in dem Küchengerät 1 abgewogen werden können. Hierzu sind Wägeeinrichtungen 12 vorgesehen. Erfindungsgemäß weist jeder Fußsokkel 5 eine solche Wägeeinrichtung 12 integral auf.

Durch die Anordnung der Wägeeinrichtungen 12 in den Fußsockeln 5 wird das Gesamtgewicht der Küchenmaschine 1, so u. a. inklusive Rührgefäß 10, Antrieb 7 und die in das Rührgefäß 10 eingebrachten Zutaten, ermittelt. Das Gesamtgewicht ist hierbei die Summe der drei gemessenen Werte in jedem Fußsockel 5.

Jede Wägeeinrichtung 12 besteht im Wesentlichen aus einer Keramikplatte 13 -bevorzugt in Form eines Keramik-Dickschichtmoduls-, welche Keramikplatte 13 mit zwei druckabhängigen und somit verstellbaren Widerständen 14 und zwei Festwiderständen 15 in Brückenschaltung ausgerüstet ist. In Fig. 3 ist eine schematische Darstellung einer Brückenschaltung 16 zur Ermittlung des auf dem zugeordneten Fußsockel 5 einwirkenden Gewichts dargestellt.

Die Wägeeinrichtung 12 bzw. die Brückenschaltung 16 ist leitungsverbunden mit einer nicht dargestellten Auswerteeinheit, insbesondere Auswerteelektronik. Die Leitungsverbindungen sind in Fig. 2 mit dem Bezugszeichen 17 versehen, wobei sowohl Leitungen zur Signalübertragung als auch zur Stromversorgung vorgesehen sind. In der Fig. 3 sind die Anschlüsse für die Versorgungsspannung der Brückenschaltung 16 mit A und B gekennzeichnet. Die Abgriffpunkte zur Ermittlung des gemessenen Gewichtes tragen die Bezugszeichen C und D.

Wie aus der schematischen Schnittdarstellung in Fig. 2 zu erkennen, ist die Keramikplatte 13 topfartig eingezogen. Die Brückenschaltung 16 und somit die druckabhängigen Widerstände 14 und auch die Festwiderstände 15 sind im Bereich des Topfbodens 18 angeordnet, wobei die Brückenschaltung 16 innenseitig, dem Inneren der Küchenmaschine 1 zugewandt, angeordnet sind, während außenseitig gegenüberliegend zu den Widerständen 14, 15 ein Druckfuß 19 vorgesehen ist, welcher über einen zentralen Dornfortsatz 20 unterseitig gegen den Topfboden 18 der Keramikplatte 13 tritt und hierdurch auf die, auf der Keramikplatte 13 aufgebrachte Brückenschaltung 16 widerstandsändernd einwirkt.

Durch die erfindungsgemäße Ausgestaltung ist eine erhöhte Auflösung ermöglicht. Darüber hinaus ist es durch diese Ausgestaltung nicht nötig, das Gerät selbst verwindungssteif auszugestalten. Schließlich erweist es sich noch als vorteilhaft, dass durch die gewählte Anordnung der Wägeeinrichtungen 12 in Fußsockeln 5 diese auch zur Nachrüstung an Küchengeräten ohne Wägeeinrichtung als Zubehörteil angeboten werden können.

Alle offenbarten-Merkmale sind (für sich) erfindungswesentlich.

## Patentansprüche

1. Küchenmaschine (1) mit einem Rührgefäß (10) und einem Antrieb (7) für ein Rührwerk (11) in dem Rührgefäß (10), wobei das Rührgefäß (10) in seinem unteren Bereich aufheizbar und weiter eine Wägeeinrichtung (12) vorgesehen ist und wobei weiter die Küchenmaschine (1) über voneinander distanzierte Fußsockel (5) auf einer Unterlage aufsteht, **dadurch gekennzeichnet, dass** in jedem Fußsockel (5) eine Wägeeinrichtung (12) integriert ist.

2. Küchenmaschine nach Anspruch 1, **dadurch gekennzeichnet, dass** die Wägeeinrichtung (12) aus einer Keramikplatte (13) besteht, die mit druckabhängigen Widerständen (14) und Festwiderständen (15) in Brückenschaltung ausgerüstet ist.

3. Küchenmaschine nach Anspruch 2, **dadurch gekennzeichnet, dass** die Widerstände (14,15) innenseitig, dem Inneren der Küchenmaschine (1) zugewandt angeordnet sind, während außenseitig gegenüberliegend zu den Widerständen (14,15) ein Druckfuß (19) vorgesehen ist.

4. Küchenmaschine nach Anspruch 2 oder 3, **dadurch gekennzeichnet, dass** die Keramikplatte (13) topfartig eingezogen ist und die Widerstände (14,15) auf dem Topfboden (18) angeordnet sind.

5. Küchenmaschine nach einem der Ansprüche 1 bis 4, **dadurch gekennzeichnet, dass** drei Druckfüße (19) vorgesehen sind.

## Claims

1. Food processor (1) with a mixing vessel (10) and a drive (7) for an agitator (11) in the mixing vessel (10), it being the case that the mixing vessel (10) can be heated in its lower region and, furthermore, a weighing device (12) is provided, and that, furthermore, the food processor (1) stands on an underlying surface via spaced-apart feet (5), **characterized in that** a weighing device (12) is integrated in each foot (5).

2. Food processor according to Claim 1, **characterized in that** the weighing device (12) comprises a ceramic plate (13) which is equipped with pressure-dependent resistors (14) and fixed resistors (15) in a bridge circuit.

3. Food processor according to Claim 2, **characterized in that** the resistors (14, 15) are disposed on the inside, directed towards the interior of the food processor (1), while a pressure foot (19) is provided on the outside, opposite the resistors (14, 15).

4. Food processor according to Claim 2 or 3, **characterized in that** the ceramic plate (13) is drawn in in a cup-like manner, and the resistors (14, 15) are disposed on the cup base (18).

5. Food processor according to one of Claims 1 to 4, **characterized in that** three pressure feet (19) are provided.

## Revendications

1. Appareil ou robot (1) de cuisine comportant un récipient (10) agitateur-mélangeur et un entraînement (7) pour un mécanisme (11) agitateur-mélangeur dans le récipient (10) agitateur-mélangeur, dans lequel appareil le récipient (10) agitateur-mélangeur est susceptible d'être chauffé dans sa zone inférieure et, en outre, un dispositif (12) de pesage est prévu et dans lequel, en plus, l'appareil (1) de cuisine est placé debout sur un support par l'intermédiaire de socles (5) de pied écartés les uns des autres, **caractérisé en ce que** dans chaque socle (5) de pied est intégré un dispositif (12) de pesage.

2. Appareil de cuisine selon la revendication 1, **caractérisé en ce que** le dispositif (12) de pesage se compose d'une plaque (13) de céramique qui est équipée de résistances (14) dépendantes de la pression et de résistances (15) fixes montées en pont.

3. Appareil de cuisine selon la revendication 2, **caractérisé en ce que** les résistances (14, 15), du côté intérieur, sont disposées de manière à être dirigées vers l'intérieur de l'appareil (1) de cuisine, alors que du côté extérieur, situé en face des résistances (14, 15), est prévu un pied (19) de pressage.

4. Appareil de cuisine selon la revendication 2 ou 3, **caractérisé en ce que** la plaque (13) de céramique est repliée en forme de pot et les résistances (14, 15) sont disposées sur le fond (18) du pot.

5. Appareil de cuisine selon l'une quelconque des revendications 1 à 4, **caractérisé en ce que** trois pieds (19) de pressage sont prévus.
